# FASCICULE DE BREVET EUROPEEN

(11) **EP 3 021 089 B1**
(45) Date de publication et mention de la délivrance du brevet: **07.11.2018**
(21) Numéro de dépôt: 15195027.6
(22) Date de dépôt: 17.11.2015
(51) Int. Cl.: G01D 5/245

(54) **SYSTÈME DE DÉTERMINATION DE LA POSITION ABSOLUE D'UN ORGANE**
SYSTEM ZUR BESTIMMUNG DER ABSOLUTEN POSITION EINES ORGANS
SYSTEM FOR DETERMINING THE ABSOLUTE POSITION OF A MEMBER

(30) Priorité: 17.11.2014 FR 1461085
(43) Date de publication de la demande: 18.05.2016
(73) Titulaire: NTN-SNR Roulements, 74000 Annecy (FR)
(72) Inventeur: DURET, Christophe, 74290 Bluffy (FR); FLAMMIER, Cécile, 74000 Annecy (FR)
(74) Mandataire: Sayettat, Julien Christian

(56) Documents cités:
- EP-A1- 1 403 622
- WO-A1-2013/132207
- DE-A1- 19 643 538
- DE-A1- 19 729 312
- DE-U1-202014 101 061

## Description

L'invention concerne un système de détermination de la position absolue d'un organe, notamment de la position angulaire absolue d'un organe tournant ou de la position linéaire absolue d'un organe mobile en translation.

En particulier, la position absolue est déterminée par rapport à une position de référence, et immédiatement à la mise sous tension du système, notamment sans nécessiter un déplacement initial minimal de l'organe.

Pour déterminer la position d'un organe, on connaît un système comprenant un codeur qui est destiné à être solidaire en déplacement dudit organe, ledit codeur comprenant une piste magnétique principale qui est apte à délivrer un champ magnétique périodique représentatif du déplacement dudit codeur et un capteur de position apte à lire ledit champ pour former un signal représentatif de la position de ladite piste principale.

Pour rendre absolue la position déterminée, le codeur peut comprendre une piste magnétique secondaire, le capteur présentant alors deux motifs d'éléments sensibles aux champs magnétiques, chaque motif étant disposé à distance de lecture d'une piste pour former un signal représentatif de la position angulaire de ladite piste, ledit capteur comprenant en outre un dispositif de traitement des signaux issus des motifs pour déterminer la position absolue de l'organe.

En particulier, le document EP-1 403 622 prévoit que la piste secondaire soit formée d'une succession alternée de pôles Nord et de pôles Sud qui présente des singularités magnétiques formant un code binaire permettant de discriminer la position absolue de la piste principale.

Le document DE202014101061 décrit un système de détermination de la position absolue d'un organe selon l'état de la technique.

Ce type de codeur ne permet le calcul de la position absolue qu'après un certain déplacement de l'organe et donc pas immédiatement dès la mise sous tension du système de détermination.

Le document EP-2 372 313 prévoit que la piste magnétique secondaire soit constituée d'une succession alternée de pôles Nord et Sud en nombre différent de la piste magnétique principale. La mesure de la phase des deux signaux magnétiques, principal et secondaire, permet alors de déterminer la position absolue de l'organe, dès la mise sous tension du système de détermination.

Ce type de codeur s'avère malheureusement difficile à aimanter, en particulier lorsque les deux pistes sont rapprochées, ce qui nuit à la fiabilité et à la précision de la discrimination de la position absolue, en particulier lorsque l'entrefer de fonctionnement augmente.

L'invention a pour but de résoudre les problèmes de l'art antérieur en proposant notamment un système de détermination comprenant un codeur dont les pistes magnétiques peuvent être facilement aimantées, notamment en une seule fois, tout en fournissant une position absolue fiable, en particulier dès la mise sous tension du système.

A cet effet, l'invention propose un système de détermination de la position absolue d'un organe, ledit système comprenant un codeur qui est destiné à être solidaire en déplacement dudit organe, ledit codeur comprenant une piste magnétique principale qui est apte à délivrer un champ magnétique périodique représentatif du déplacement dudit codeur et un capteur de position apte à lire ledit champ pour former un signal représentatif de la position de ladite piste principale, le codeur comprenant une piste magnétique secondaire dont au moins un secteur présente une succession de dipôles magnétiques Nord / Sud présentant chacun une même longueur L_{b} dans laquelle les pôles Nord et Sud sont agencés suivant un état parmi au moins deux états différents, lesdits dipôles étant répartis le long du secteur pour former une séquence d'états de longueur l inférieure ou égale à la longeur de 2ⁿ dipôles, ledit système comprenant au moins n capteurs d'état disposés à distance de lecture du secteur de la piste secondaire, chaque capteur étant apte à lire l'état d'un dipôle disposé en regard, lesdits capteurs étant répartis le long dudit secteur de sorte à pouvoir lire un code de n états, ledit système comprenant un dispositif de discrimination d'une position absolue de la piste principale en fonction dudit code.

D'autres objets et avantages de l'invention apparaîtront dans la description qui suit, faite en référence aux figures annexées, dans lesquelles :
- la figure 1 est une représentation schématique en vue de dessus des pistes d'un codeur d'un système de détermination selon l'invention ;
- les figures 2a à 2c montrent des dispositions de motifs d'un capteur d'état par rapport à la piste secondaire du codeur de la figure 1 ;
- les figures 3a et 3b montrent des dispositions des points de lecture de capteurs d'état par rapport à la piste secondaire du codeur de la figure 1.

En relation avec ces figures, on décrit ci-dessous un système de détermination de la position absolue d'un organe, notamment de la position angulaire absolue d'un organe tournant ou de la position linéaire absolue d'un organe mobile en translation. En particulier, la position absolue peut être déterminée par rapport à une position de référence, et immédiatement à la mise sous tension du système, notamment sans nécessiter un déplacement initial minimal de l'organe.

Pour ce faire, le système de détermination comprend un codeur 1 qui est destiné à être solidaire en déplacement de l'organe, ledit codeur comprenant une piste magnétique principale 2 qui est apte à délivrer un champ magnétique périodique représentatif du déplacement dudit codeur.

Dans le mode de réalisation représenté, la piste principale 2 est multipolaire, c'est-à-dire qu'elle est formée d'une succession alternée de pôles 3 Nord (en noir sur les figures) et de pôles 3 Sud (en blanc sur les figures) présentant chacun une longueur polaire Lₚ fixe afin de délivrer le long de ladite piste un signal magnétique pseudo-sinusoïdal.

Selon une réalisation, le codeur 1 est formé d'un aimant sur lequel les pôles 3 magnétiques sont formés. En particulier, l'aimant peut comprendre une matrice, par exemple réalisée à base d'un matériau plastique ou élastomère, dans laquelle sont dispersées des particules magnétiques, notamment des particules de ferrite ou de terres rares comme le NdFeB, qui sont aimantées suivant la succession de pôles 3.

Le système de détermination comprend un capteur de position apte à lire le champ magnétique de la piste principale 2 pour former un signal représentatif de la position de ladite piste principale. En particulier, le capteur de position présente au moins un motif d'éléments sensibles qui sont aptes à détecter le champ magnétique délivré par la piste principale 2 de sorte à délivrer deux signaux électriques périodiques en quadrature. Selon une réalisation avantageuse enseignée notamment par les documents FR-2 792 403, EP-2 602 593 ou EP-2 602 594, chaque motif comprend une pluralité d'éléments sensibles alignés.

Par ailleurs, le capteur de position comprend un dispositif de traitement des deux signaux périodiques en quadrature qui est apte à déterminer les variations incrémentales de position de la piste principale 2. En particulier, le dispositif de traitement forme deux signaux digitaux de position carrés en quadrature dont le nombre de fronts est détecté pour incrémenter ou décrémenter la position déterminée.

Pour rendre absolue la position déterminée, le codeur comprend une piste magnétique secondaire 4 dont au moins un secteur présente une succession de dipôles magnétiques 5 Nord / Sud présentant chacun une même longueur dipolaire L_{b} dans laquelle les pôles Nord et Sud sont agencés suivant un état parmi au moins deux états différents.

En relation avec les figures, la piste secondaire 4 présente deux états de dipôles 5 :
- un état 0 défini par la succession d'un pôle - Nord sur les figures - de dimension d₀ inférieure à L_{b} et d'un pôle opposé - Sud sur les figures - de dimension L_{b}-d₀ différente de d₀ ;
- un état 1 défini par la succession du pôle - Nord sur les figures - de dimension d₁ différente de d₀ et inférieure à L_{b} et du pôle opposé - Sud sur les figures - de dimension L_{b}-d₁ différente de d₁ ; la séquence d'état représentée étant : 1 0 0 1 0 1 1 1.

En particulier, la dimension d₁ est égale à L_{b}-d₀, notamment avec une dimension d₀ qui est égale à 1/3L_{b}, ce qui correspond à un rapport optimal pour bien pouvoir différencier les états. En outre, le fait que la longueur dipolaire L_{b} soit constante permet de faciliter l'aimantation des pistes 2, 4 du codeur, notamment en une seule fois, alors même que les longueurs des pôles formant les dipôles 5 varient pour pouvoir assurer le codage absolu de la position.

Selon une réalisation, la longueur polaire Lₚ de la piste principale 2 est telle que L_{b} ≤ 2Lₚ, afin que chaque paire de pôles 3 Nord Sud de la piste principale 2 soit codée par au moins un état de la piste secondaire 4, notamment en étant égale à la longueur dipolaire L_{b} de ladite piste secondaire afin que chaque pôle 3 de ladite piste principale soit codé.

En relation avec les figures, chaque pôle 3 de la piste principale 2 est, suivant une direction y perpendiculaire à ladite piste, en regard d'un dipôle 5 de la piste secondaire 4. En particulier, le nombre de dipôles 5 de la piste secondaire 4 est égal au nombre de pôles 3 de la piste principale 2, l'alternance magnétique entre lesdits dipôles étant ainsi alignée avec celle desdits pôles. Ainsi, le champ magnétique de la piste principale 2 est peu perturbé par celui de la piste secondaire 4, ce qui fiabilise la détermination de la position par le capteur.

Les dipôles 5 sont répartis le long du secteur pour former une séquence d'états de longueur l inférieure ou égale à la longueur de 2ⁿ dipôles, le système de détermination comprenant au moins n capteurs d'état 6 disposés à distance de lecture du secteur de la piste secondaire 4, chaque capteur 6 étant apte à lire l'état d'un dipôle 5 disposé en regard.

On peut démontrer mathématiquement que, lorsque la longueur l est inférieure ou égale à la longueur de 2ⁿ dipôles, la connaissance de n états permet de coder au maximum 2ⁿ positions différentes. Ainsi, en répartissant les capteurs d'état 6 le long du secteur de sorte à pouvoir lire un code de n états, n étant notamment supérieur à 3, il est possible de discriminer une position absolue de la piste principale 2 en fonction dudit code. En particulier, pour une piste principale 2 comportant 96 paires de pôle 3, la lecture de n = 7 états parmi une séquence de moins de 128 états permet de discriminer la position absolue de chacune desdites paires.

Le système de détermination comprend un dispositif de discrimination permettant, après lecture simultanée ou séquentielle des n états, de discriminer la paire de pôles 3 de la piste principale 2 dont le champ est lu par le capteur de position. Ainsi, dès la mise sous tension du système, la position haute résolution obtenue au moyen de la piste principale 2 est rendue absolue, la position absolue étant ensuite déterminée au moyen de la piste principale 2, notamment à partir des variations incrémentales de position depuis la position absolue discriminée.

Selon une réalisation, les pistes principale 2 et secondaire 4 présentent une géométrie annulaire concentrique par rapport à un axe de rotation qui correspond à celui de l'organe tournant dont la position angulaire absolue est déterminée. Toutefois, l'invention peut s'appliquer également à une détermination de position linéaire au moyen d'un codeur 1 linéaire dans lequel les pistes 2, 4 peuvent être superposées radialement par rapport au sens de déplacement.

La séquence d'états peut présenter une longueur l qui s'étend sur un secteur correspondant à une révolution complète du codeur 1. En variante, le secteur peut s'étendre sur une portion d'un tour, par exemple sur 180° ou 90°, le système de détermination comprenant éventuellement des moyens de discrimination du secteur de la piste secondaire 4 sur lequel le code de n états est lu.

En particulier, le nombre de dipôles 5 du secteur est complétement ajustable au nombre de pôles 3 du secteur correspondant de la piste principale 2, notamment en étant agencé pour former une séquence d'états dont chaque code de n états est unique le long dudit secteur.

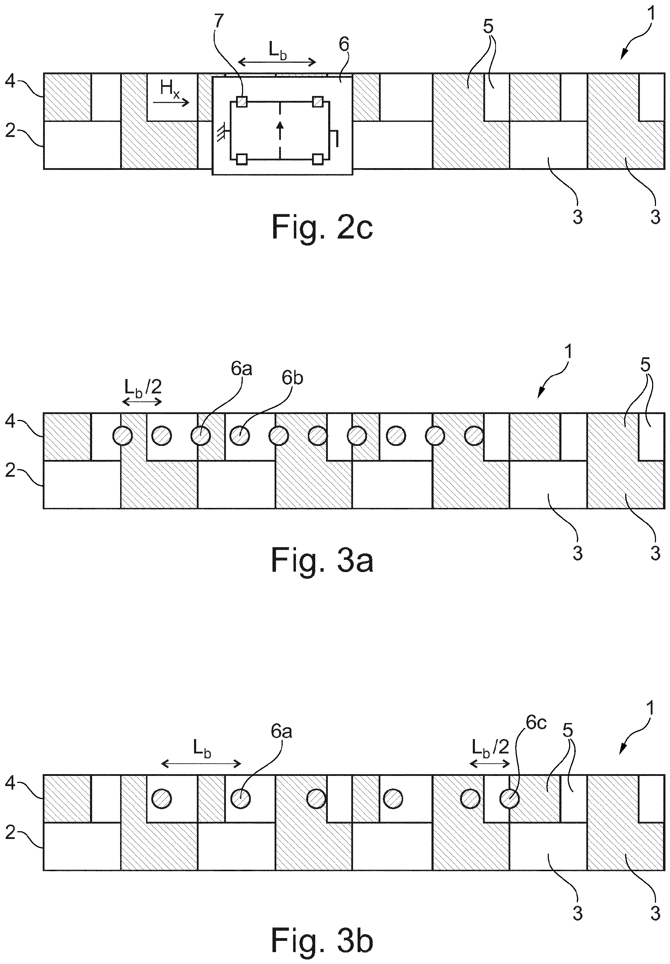

En relations avec les figures 3, les n capteurs d'états 6 sont disposés le long du secteur pour lire les n états en des points de lecture qui sont séparés d'une distance L_{b}. Ainsi, dès la mise sous tension du système, les n états peuvent être lus simultanément.

Lorsque tous les points de lectures sont dans des zones où les n états sont facilement identifiables (par exemple au-dessus d'un seuil haut ou en-dessous d'un seuil bas), la lecture du code de n états ne pose pas de problème. Si en revanche, un au moins des états du code est indéterminé (par exemple entre les deux seuils), il faut un artifice supplémentaire pour discriminer la position absolue sans avoir à se déplacer le long de la séquence d'états.

Selon la réalisation de la figure 3a, le système comprend deux jeux de n capteurs d'état 6a, 6b qui sont décalés le long du secteur, au moins un code de n états étant lu pour discriminer la position absolue de la piste principale 2. En particulier, les deux jeux de n capteurs d'état 6a, 6b sont disposés le long du secteur pour pouvoir lire deux codes de n états en des points de lecture qui sont décalés d'une distance L_{b}/2.

Ainsi, on montre que si le premier jeu de capteurs d'état 6a ne permet pas de lire un code de n états, le second jeu de capteurs d'état 6b le permet et vice et versa. En outre, la lecture d'un code supplémentaire permet de donner une certaine redondance à la discrimination.

Selon la réalisation de la figure 3b, le système comprend un capteur d'état supplémentaire 6c qui est apte à lire un état supplémentaire utilisable par le dispositif pour discriminer la position absolue de la piste principale 2. En particulier, le capteur supplémentaire 6c est disposé le long du secteur pour pouvoir lire un état supplémentaire en un point de lecture qui est espacé d'une distance L_{b}/2 d'au moins un point de lecture d'un état lu par un des n capteurs d'état 6a.

Ainsi, si les n points de lecture séparés de L_{b} se trouvent en regard des n transitions entre les dipôles 5, aucun état n'est connu mais l'ajout d'un nouveau point de lecture distant de L_{b}/2 (ou d'un nombre impair de fois L_{b}/2) sera forcément en regard d'un état lisible.

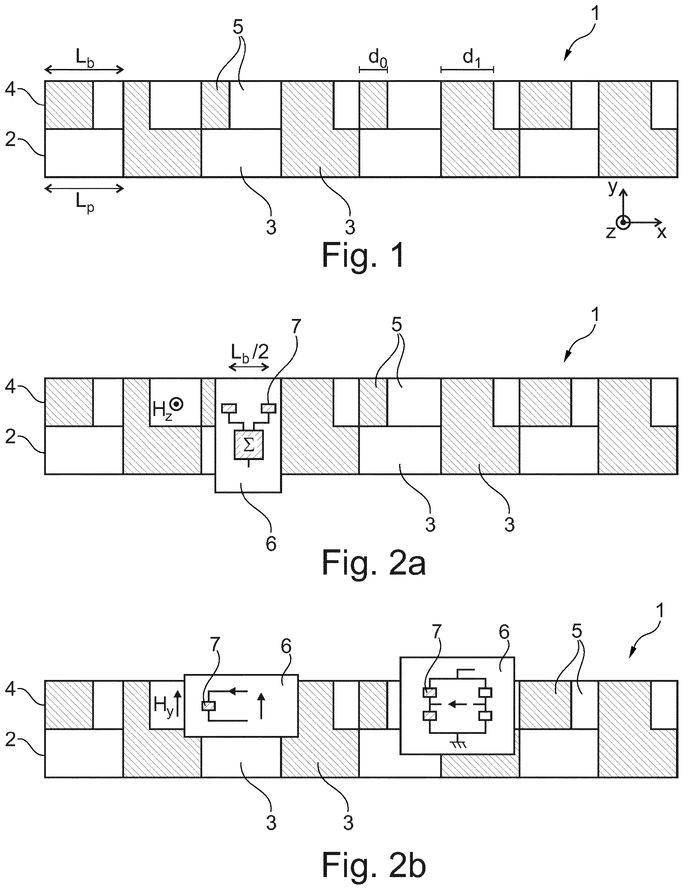

En relation avec les figures 2, chaque capteur d'état 6 présente au moins un motif 7 d'éléments sensibles qui sont aptes à détecter le champ magnétique délivré par la piste secondaire 4 pour le transformer en signal électrique. En particulier, chaque capteur d'état 6 peut définir un seuil haut et un seuil bas pour le signal afin de pouvoir distinguer les états 0 et 1.

Comme pour le capteur de position, au moins un élément sensible peut être formé d'une sonde à effet Hall. En variante, au moins un élément sensible présente au moins une couche sensible à base d'un matériau magnétorésistif dont la résistance varie en fonction du champ magnétique délivré par la piste magnétique 2, 4.

Selon une réalisation décrite par exemple dans le document WO-2004/083881, chaque élément sensible est formé de jonctions tunnel comprenant un empilement d'une couche magnétique de référence, d'une couche de séparation et d'une couche magnétique sensible au champ à détecter, la résistance entre les couches magnétiques étant fonction de l'orientation relative de leur aimantation. En variante, le matériau magnétorésistif peut être de type AMR ou GMR.

La figure 2a représente une disposition de deux motifs 7, notamment comprenant des sondes à effet Hall, qui sont disposés pour lire le champ normal H_{z} émis par la piste secondaire 4, notamment au moyen d'un capteur d'état 6 comprenant des moyens de combinaison des signaux issus des motifs 7, afin de pouvoir lire l'état du dipôle 5 disposé en regard dudit capteur.

En particulier, le capteur d'état 6 présente deux motifs 7 espacés d'une distance L_{b}/2, les signaux provenant des motifs 7 étant additionnés pour délivrer un signal filtré afin de pouvoir facilement interpréter l'état du dipôle 5 au moyen d'un comparateur définissant un seuil haut et un seuil bas. De plus cette méthode reste robuste lorsque la distance de lecture du champ magnétique varie.

Les éléments sensibles magnétorésistifs ne sont pas les mieux adaptés pour la lecture du champ normal H_{z} car ils devraient se positionner dans un plan perpendiculaire au codeur 1. En revanche, une simple mise en série de deux éléments permettrait d'assurer le filtrage.

La figure 2b représente une disposition de motifs 7, notamment à base d'éléments sensibles magnétorésistifs, qui sont disposés pour lire le champ radial H_{y} émis par la piste secondaire 4. En particulier, un motif 7 peut être utilisé seul (à gauche sur la figure) ou par deux en différentiel dans un montage en pont de Wheatstone, par exemple en demi-pont, entre deux positions de lectures radiales (à droite sur la figure).

La figure 2c représente un montage en pont de Wheatstone de deux motifs 7 magnétorésistifs pour lire le champ longitudinal Hₓ émis par la piste secondaire 4, lesdits motifs étant espacés longitudinalement d'une distance L_{b}.

## Revendications

1. Système de détermination de la position absolue d'un organe, ledit système comprenant un codeur (1) qui est destiné à être solidaire en déplacement dudit organe, ledit codeur comprenant une piste magnétique principale (2) qui est apte à délivrer un champ magnétique périodique représentatif du déplacement dudit codeur et un capteur de position apte à lire ledit champ pour former un signal représentatif de la position de ladite piste principale, ledit système étant **caractérisé en ce que** le codeur (1) comprend une piste magnétique secondaire (4) dont au moins un secteur présente une succession de dipôles magnétiques (5) Nord / Sud présentant chacun une même longueur L_{b} dans laquelle les pôles Nord et Sud sont agencés suivant un état parmi au moins deux états différents, lesdits dipôles étant répartis le long du secteur pour former une séquence d'états de longueur l inférieure ou égale à la longueur de 2ⁿ dipôles, et **en ce qu'**il comprend au moins n capteurs d'état (6) disposés à distance de lecture du secteur de la piste secondaire (4), chaque capteur (6) étant apte à lire l'état d'un dipôle (5) disposé en regard, lesdits capteurs étant répartis le long dudit secteur de sorte à pouvoir lire un code de n états, ledit système comprenant un dispositif de discrimination d'une position absolue de la piste principale (2) en fonction dudit code.

2. Système de détermination selon la revendication 1, **caractérisé en ce qu'**un dipôle (5) d'état 0 est défini par la succession d'un pôle de dimension d₀ inférieure à L_{b} et d'un pôle opposé de dimension L_{b}-d₀ différente de do, un dipôle (5) d'état 1 étant défini par la succession du pôle de dimension d₁ différente de d₀ et inférieure à L_{b} et du pôle opposé de dimension L_{b}-d₁ différente de d₁.

3. Système de détermination selon la revendication 2, **caractérisé en ce que** la dimension d₁ est égale à L_{b}-d₀.

4. Système de détermination selon l'une des revendications 2 ou 3, **caractérisé en ce que** la dimension d₀ est égale à 1/3L_{b}.

5. Système de détermination selon l'une quelconque des revendications 1 à 4, **caractérisé en ce que** la piste principale (2) est formée d'une succession alternée de pôles (3) Nord et Sud présentant chacun une longueur polaire Lₚ qui est telle que L_{b} ≤ 2Lₚ.

6. Système de détermination selon la revendication 5, **caractérisé en ce que** la longueur polaire Lₚ de la piste principale (2) est égale à la longueur dipolaire L_{b} de la piste secondaire (4).

7. Système de détermination selon la revendication 6, **caractérisé en ce que** chaque pôle (3) de la piste principale (2) est, suivant une direction perpendiculaire à ladite piste, en regard d'un dipôle (5) de la piste secondaire (4), la lecture du code de n états permettant au dispositif de discriminer la paire de pôles (3) de la piste principale (2) dont le champ est lu par le capteur de position.

8. Système de détermination selon l'une quelconque des revendications 1 à 7, **caractérisé en ce que** le capteur de position comprend un dispositif de traitement des signaux qui est apte à déterminer les variations incrémentales de position depuis la position absolue discriminée.

9. Système de détermination selon l'une quelconque des revendications 1 à 8, **caractérisé en ce qu'**il comprend en outre des moyens de discrimination du secteur de la piste secondaire (4) sur lequel le code de n états est lu.

10. Système de détermination selon l'une quelconque des revendications 1 à 9, **caractérisé en ce que** les n capteurs d'états (6) sont disposés le long du secteur pour lire les n états en des points de lecture qui sont séparés d'une distance L_{b}.

11. Système de détermination selon l'une quelconque des revendications 1 à 10, **caractérisé en ce qu'**il comprend deux jeux de n capteurs d'état (6a, 6b) qui sont décalés le long du secteur, au moins un code de n états étant lu pour discriminer la position absolue de la piste principale (2).

12. Système de détermination selon les revendications 10 et 11, **caractérisé en ce que** les deux jeux de n capteurs d'état (6a, 6b) sont disposés le long du secteur pour pouvoir lire deux codes de n états en des points de lecture qui sont décalés d'une distance L_{b}/2.

13. Système de détermination selon l'une quelconque des revendications 1 à 12, **caractérisé en ce qu'**il comprend un capteur d'état supplémentaire (6c) qui est apte à lire un état supplémentaire utilisable par le dispositif pour discriminer la position absolue de la piste principale (2).

14. Système de détermination selon l'une quelconque des revendications 1 à 13, **caractérisé en ce que** chaque capteur d'état (6) présente au moins un motif (7) d'éléments sensibles qui sont aptes à détecter le champ magnétique délivré par la piste secondaire (4).

15. Système de détermination selon la revendication 14, **caractérisé en ce que** chaque capteur d'état (6) comprend des moyens de combinaison des signaux issus du ou des motif(s) (7) afin de pouvoir lire l'état du dipôle (5) disposé en regard dudit capteur.

16. Système de détermination selon l'une des revendications 14 ou 15, **caractérisé en ce qu'**un capteur d'état (6) présente deux motifs (7) espacés d'une distance L_{b}/2.

## Patentansprüche

1. System zum Bestimmen der absoluten Position eines Organs, wobei das System einen Geber (1) umfasst, der dazu bestimmt ist, mit dem Organ bewegungsverbunden zu sein, wobei der Geber einen Hauptmagnetstreifen (2) umfasst, der imstande ist, ein periodisches Magnetfeld zu erstellen, das repräsentativ für die Bewegung des Gebers ist und einen Positionssensor, der imstande ist, das Feld zu lesen, um ein für die Position des Hauptstreifens repräsentatives Signal zu bilden, wobei das System **dadurch gekennzeichnet ist, dass** der Geber (1) einen Sekundärmagnetstreifen (4) umfasst, von dem mindestens ein Sektor eine Folge von magnetischen Nord/Süd Dipolen (5) aufweist, die jeweils eine selbe Länge L_{b} aufweisen, in der die Nord- und Südpole entsprechend einem Zustand aus mindestens zwei unterschiedlichen Zuständen angeordnet sind, wobei die Dipole entlang des Sektors verteilt sind, um eine Sequenz von Zuständen der Länge 1 kleiner oder gleich der Länge von 2ⁿ Dipolen zu bilden, und dadurch, dass es mindestens n Zustandssensoren (6) umfasst, die im Leseabstand des Sektors des Sekundärstreifens (4) angeordnet sind, wobei jeder Sensor (6) imstande ist, den Zustand eines Dipols (5) zu lesen, der gegenüber angeordnet ist, wobei die Sensoren derart entlang des Sektors verteilt sind, um einen Code von n Zuständen lesen zu können, wobei das System eine Vorrichtung zur Auswertung einer absoluten Position des Hauptstreifens (2) in Abhängigkeit von dem Code umfasst.

2. System zum Bestimmen nach Anspruch 1, **dadurch gekennzeichnet, dass** ein Dipol (5) des Zustands 0 durch die Folge eines Pols der Abmessung d₀ kleiner als L_{b} und einen gegenüberliegenden Pol der Abmessung L_{b}-d₀ ungleich d₀ definiert ist, wobei ein Dipol (5) des Zustands 1 durch die Folge des Pols der Abmessung d₁ ungleich d₀ und kleiner als L_{b} und des gegenüberliegenden Pols der Abmessung L_{b}-d₁ ungleich d₁ definiert ist.

3. System zum Bestimmen nach Anspruch 2, **dadurch gekennzeichnet, dass** die Abmessung d₁ gleich L_{b}-d₀ ist.

4. System zum Bestimmen nach einem der Ansprüche 2 oder 3, **dadurch gekennzeichnet, dass** die Abmessung d₀ gleich 1/3L_{b} ist.

5. System zum Bestimmen nach einem der Ansprüche 1 bis 4, **dadurch gekennzeichnet, dass** der Hauptstreifen (2) aus einer abwechselnden Folge von Nord- und Südpolen (3) gebildet wird, die jeweils eine polare Länge Lₚ aufweisen, welche L_{b}≤2Lₚ entspricht.

6. System zum Bestimmen nach Anspruch 5, **dadurch gekennzeichnet, dass** die Länge Lₚ des Hauptstreifens (2) gleich der Dipol-Länge L_{b} des Sekundärstreifens (4) ist.

7. System zum Bestimmen nach Anspruch 6, **dadurch gekennzeichnet, dass** jeder Pol (3) des Hauptstreifens (2) in eine Richtung senkrecht zu dem Streifen gegenüber einem Dipol (5) des Sekundärstreifens (4) ist, wobei das Lesen des Codes von n Zuständen es der Vorrichtung erlaubt, das Paar von Polen (3) des Hauptstreifens (2) auszuwerten, dessen Feld durch den Positionssensor gelesen wird.

8. System zum Bestimmen nach einem der Ansprüche 1 bis 7, **dadurch gekennzeichnet, dass** der Positionssensor eine Vorrichtung zur Verarbeitung der Signale umfasst, die imstande ist, die inkrementellen Positionsvariationen aus der ausgewerteten absoluten Position zu bestimmen.

9. System zum Bestimmen nach einem der Ansprüche 1 bis 8, **dadurch gekennzeichnet, dass** es weiter Mittel zum Auswerten des Sektors des Sekundärstreifens (4) umfasst, auf dem der Code von n Zuständen gelesen wird.

10. System zum Bestimmen nach einem der Ansprüche 1 bis 9, **dadurch gekennzeichnet, dass** die n Zustandssensoren (6) entlang des Sektors angeordnet sind, um die n Zustände in Lesepunkten zu lesen, die um einen Abstand L_{b} getrennt sind.

11. System zum Bestimmen nach einem der Ansprüche 1 bis 10, **dadurch gekennzeichnet, dass** es zwei Sätze von n Zustandssensoren (6a, 6b) umfasst, die entlang des Sektors versetzt sind, wobei mindestens ein Code von n Zuständen gelesen wird, um die absolute Position des Hauptstreifens (2) auszuwerten.

12. System zum Bestimmen nach den Ansprüchen 10 und 11, **dadurch gekennzeichnet, dass** die zwei Sätze von n Zustandssensoren (6a, 6b) entlang des Sektors angeordnet sind, um zwei Codes von n Zuständen in Lesepunkten lesen zu können, die um einen Abstand L_{b}/2 versetzt sind.

13. System zum Bestimmen nach einem der Ansprüche 1 bis 12, **dadurch gekennzeichnet, dass** es einen zusätzlichen Zustandssensor (6c) umfasst, der imstande ist, einen zusätzlichen Zustand zu lesen, der von der Vorrichtung zum Auswerten der absoluten Position des Hauptstreifens (2) verwendbar ist.

14. System zum Bestimmen nach einem der Ansprüche 1 bis 13, **dadurch gekennzeichnet, dass** jeder Zustandssensor (6) mindestens ein Motiv (7) an empfindlichen Elementen aufweist, die imstande sind, das Magnetfeld zu detektieren, das durch den Sekundärstreifen (4) erstellt wird.

15. System zum Bestimmen nach Anspruch 14, **dadurch gekennzeichnet, dass** jeder Zustandssensor (6) Mittel zum Kombinieren der Signale aus dem oder den Motiv(-en) (7) umfasst, um den Zustand des Dipols (5) lesen zu können, der gegenüber dem Sensor angeordnet ist.

16. System zum Bestimmen nach einem der Ansprüche 14 oder 15, **dadurch gekennzeichnet, dass** ein Zustandssensor (6) zwei Motive (7) aufweist, die um einen Abstand von L_{b}/2 beabstandet sind.

## Claims

1. System for determination of the absolute position of a member, said system comprising a coder (1) that is destined to be solidarity in displacement with said element, said coder comprising a principal magnetic track (2) that is able to deliver a periodic magnetic field representative of the displacement of said coder, and a position sensor capable of reading said field to form a signal representative of the position of said principal track, said system being **characterised in that** the coder (1) comprises a secondary magnetic track (4), of which at least one sector comprises a succession of North / South magnetic dipoles (5) each having a same length L_{b} in which the North and South poles are arranged in one state out of two different states, said dipoles being distributed along the sector to form a sequence of states with length 1 less than or equal to the length of 2ⁿ dipoles, and **in that** it comprises at least n state sensors (6) located at a reading distance from the sector of the secondary track (4), each sensor (6) being capable of reading the state of a dipole (5) located facing it, said sensors being distributed along said sector so as to be able to read a code of n states, said system comprising a device to discriminate an absolute position of the principal track (2) as a function of said code.

2. Determination system according to claim 1, **characterised in that** a dipole (5) with state 0 is defined by the succession of one pole with a dimension d₀ less than L_{b} and an opposite pole with dimension L_{b}-d₀ different from d₀, a dipole (5) with state 1 being defined by the succession of the pole with dimension d₁ different from d₀ and less than L_{b} and the opposite pole with dimension L_{b}-d₁ different from d₁.

3. Determination system according to claim 2, **characterised in that** the dimension d₁ is equal to L_{b}-d₀.

4. Determination system according to either claim 2 or 3, **characterised in that** the dimension d₀ is equal to 1/3L_{b}.

5. Determination system according to any one of claims 1 to 4, **characterised in that** the principal track (2) is formed from an alternating succession of North and South poles (3) each with a polar length Lₚ such that L_{b} ≤ 2Lₚ.

6. Determination system according to claim 5, **characterised in that** the polar length Lₚ of the principal track (2) is equal to the dipolar length L_{b} of the secondary track (4).

7. Determination system according to claim 6, **characterised in that** each pole (3) of the principal track (2) is facing a dipole (5) of the secondary track (4) along a direction perpendicular to the said track, reading the code with n states makes it possible for the device to discriminate the pair of poles (3) in the principal track (2), the field of which is read by the position sensor.

8. Determination system according to any one of claims 1 to 7, **characterised in that** the position sensor comprises a signal processing device that is able to determine incremental position variations from the discriminated absolute position.

9. Determination system according to one of claims 1 to 8, **characterised in that** it also comprises means of discriminating the sector of the secondary track (4) on which the code of n states is read.

10. Determination system according to one of claims 1 to 9, **characterised in that** the n state sensors (6) are arranged along the sector to read the n states in read points separated by a distance L_{b}.

11. Determination system according to one of claims 1 to 10, **characterised in that** it comprises two sets of n state sensors (6a, 6b) that are offset along the sector, at least one code of n states being read to discriminate the absolute position of the principal track (2).

12. Determination system according to claim 10 and 11, **characterised in that** the two sets of n state sensors (6a, 6b) are arranged along the sector to be able to read two codes of n states at read points that are offset by a distance of L_{b}/2.

13. Determination system according to any one of claims 1 to 12, **characterised in that** it comprises an additional state sensor (6c) that can read an additional state that can be used by the device to discriminate the absolute position of the principal track (2).

14. Determination system according to any one of claims 1 to 13, **characterised in that** each state sensor (6) has at least one pattern (7) of sensitive elements that are able to detect the magnetic field output by the secondary track (4).

15. Determination system according to claim 14, **characterised in that** each state sensor (6) comprises means of combining signals output from the pattern(s) (7) so that the state of the dipole (5) located facing said sensor can be read.

16. Determination system according to either claim 14 or 15, **characterised in that** a state sensor (6) has two patterns (7) spaced at a distance of L_{b}/2.
